# EUROPÄISCHE PATENTSCHRIFT

(11) **EP 0 773 443 B1**
(45) Veröffentlichungstag und Bekanntmachung des Hinweises auf die Patenterteilung: **24.05.2000**
(21) Anmeldenummer: 96117587.4
(22) Anmeldetag: 02.11.1996
(51) Int. Cl.: G01P 15/125, G01P 15/08

(54) **Mikromechanischer Beschleunigungssensor**
Micro-machined accelerometer
Accéléromètre micro-usine

(30) Priorität: 07.11.1995 DE 19541388
(43) Veröffentlichungstag der Anmeldung: 14.05.1997
(73) Patentinhaber: TEMIC TELEFUNKEN microelectronic GmbH, 90411 Nürnberg (DE)
(72) Erfinder: Flach, Georg, 71120 Grafenau (DE); Nothelfer, Udo, 89278 Nersingen (DE); Schuster, Günther, Dr., 73108 Gammelshausen (DE); Weber, Heribert, 73230 Kirchheim/Teck (DE)
(74) Vertreter: Maute, Hans-Jürgen, Dipl.-Ing.

(56) Entgegenhaltungen:
- DE-A- 4 126 100
- GB-A- 2 101 336
- US-A- 4 918 032

## Beschreibung

Die Erfindung betrifft einen mikromechanischen Beschleunigungssensor nach dem Oberbegriff des Patentanspruchs 1.

Ein kapazitiver Beschleunigungssensor nach dem **Stand der Technik** ist beispielsweise aus der Patentschrift US 4,483,194 bekannt. Der darin beschriebene Sensor weist eine Zungenstruktur auf, die mittels der sog. "Bulk-Mikromechanik" hergestellt wird. Die Änderung seiner Kapazität, die sich aufgrund einer auf den Sensor einwirkenden Beschleunigungskraft ergibt, wird mit einer separaten Schaltungsanordnung ausgewertet.

Dieser Sensor weist den **Nachteil** auf, daß zur Herstellung des Sensors ein Verfahren verwendet wird, bei dem der verwendete Wafer von seiner Rückseite her vollständig durchgeätzt werden muß. Aufgrund des kristallographisch vorgegebenen Ätzwinkels wird daher teure Siliziumfläche benötigt. Zudem muß das Sensorelement mit zwei weiteren Wafern verpackt werden, um hermetisch dicht zu sein.

Es ist **Aufgabe der Erfindung**, einen kapazitiven Beschleunigungssensor anzugeben, so daß die vorgenannten Nachteile vermieden werden.

Diese Aufgabe wird durch einen mikromechanischen Beschleunigungssensor **gelöst**, der aus einem ersten Halbleiterwafer und einem zweiten Halbleiterwafer besteht, wobei auf dem ersten Halbleiterwafer wenigstens eine erste Elektrode zur Bildung einer veränderbaren Kapazität vorgesehen ist und der zweite Halbleiterwafer eine bewegliche zweite Elektrode aufweist, und wobei auf dem ersten Halbleiterwafer eine mikroelektronische Auswerteeinheit angeordnet ist.

Die **Vorteile** der Erfindung liegen darin, daß die Herstellung der Auswerteelektronik und des mikromechanischen Sensors getrennt und mit der jeweils optimalen Technologie erfolgen kann und daß es sich beim Endprodukt dennoch nur um einen einzigen Chip handelt. Da die Chips, auf denen die Auswerteelektronik integriert ist, eine hermetische Kapselung des Sensors herbeiführen, kann auf ein teures, hermetisch dichtes Gehäuse verzichtet werden. Zudem ergibt sich aus dem prinzipiellen Aufbau des erfindungsgemäßen Sensors eine sehr hohe Dynamik.

Ein **Ausführungsbeispiel** der Erfindung ist nachstehend ausführlich erläutert und anhand der Figuren dargestellt.

Es zeigen
- Fig. 1:: ein Schnittbild eines ersten Wafers mit einer integrierten Auswerteschaltung,
- Fig. 2:: eine perspektivische Darstellung eines zweiten Wafers mit einem Beschleunigungssensor,
- Fig. 3:: ein Schnittbild durch den zweiten Wafer während eines Ätzvorganges,
- Fig. 4:: ein Schnittbild durch den zweiten Wafer mit Metallisierung,
- Fig. 5:: ein Schnittbild durch den zweiten Wafer mit einer Maskierungsschicht,
- Fig. 6:: ein Schnittbild durch den zweiten Wafer während eines weiteren Ätzvorganges,
- Fig. 7:: ein Schnittbild durch beide Wafer während des Bondens,
- Fig. 8:: eine skizzenhafte Darstellung der prinzipiellen Funktionsweise des Beschleunigungssensors und
- Fig. 9:: eine schematische Darstellung einer Auswerteschaltung.

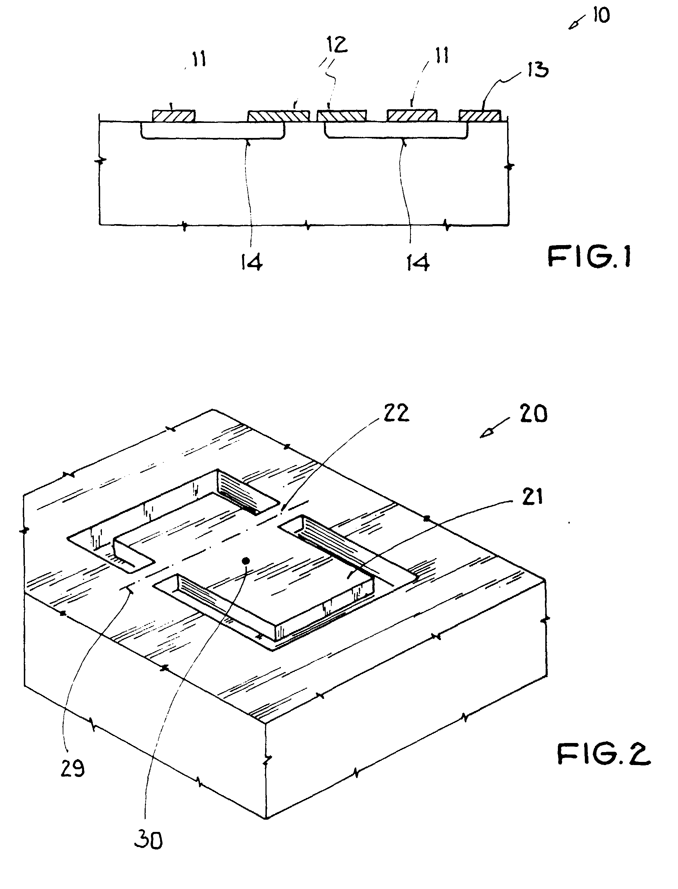

In **Fig. 1** ist ein erster Wafer 10 aus Silizium im Schnitt dargestellt, auf dem eine anwendungsspezifische, integrierte Schaltung 14, bekannt unter der Abkürzung ASIC, angeordnet ist. Die integrierte Schaltung 14 ist auf bekannte Art und Weise, bevorzugt in CMOS-Technologie, hergestellt. An definierten Stellen sind zwei Elektroden 12 aus gut leitfähigem Material (Metallebene oder Polysiliziumebene) angeordnet. Um die Elektroden 12 verläuft auf der Oberfläche des Silizium-Wafers 10 eine geschlossene Ringstruktur 11, bevorzugt hergestellt aus dem Material der obersten Metallisierungsebene, im allgemeinen Aluminium.

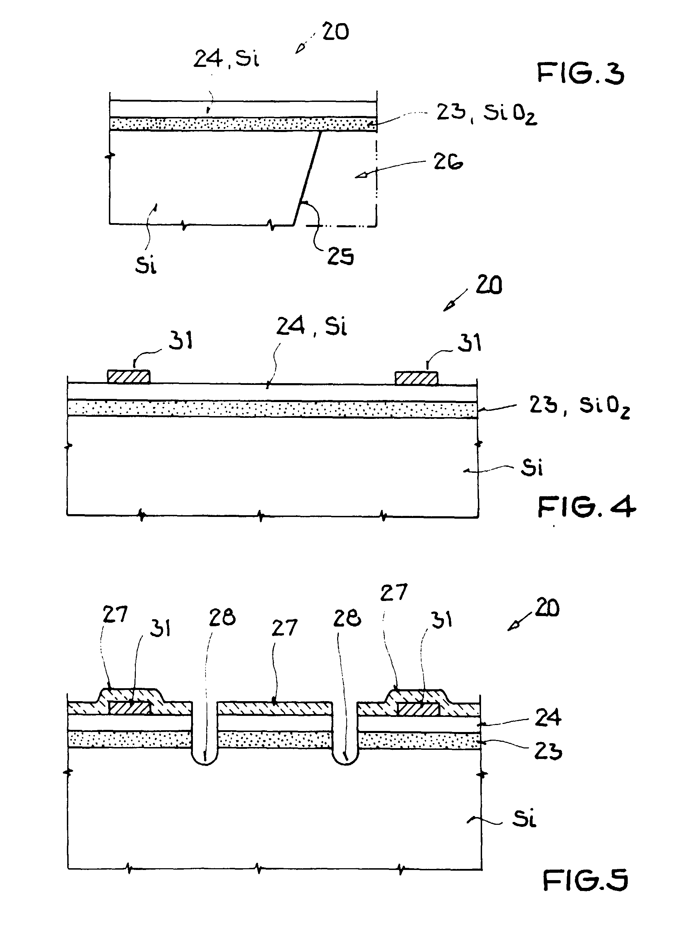

**Fig. 2** zeigt einen zweiten Wafer 20, in den auf bekannte Art und Weise ein mikromechanisches Masseteil in Form einer Wippe 21 eingebracht ist. Bevorzugt wird ein sog. SOI-Wafer (Silicon on Insulator), wobei auf den aus Silizium bestehenden Wafer 20 eine aus SiO₂ bestehende Isolierschicht 23 (Fig. 3) aufgebracht wird und auf diese wiederum eine Siliziumschicht 24 (Fig. 3) und die Dicke der Isolierschicht 23 ca. 1 bis 2 µm, die Dicke der Siliziumschicht 24 ca 10 µm beträgt. Die Wippe 21 ist mit dem SOI-Wafer 20 über zwei mikromechanisch hergestellte Torsionsstege 22 verbunden, so daß sich eine asymmetrisch und außerhalb des Schwerpunktes der Wippe 21 verlaufende Drehachse 29 ergibt.

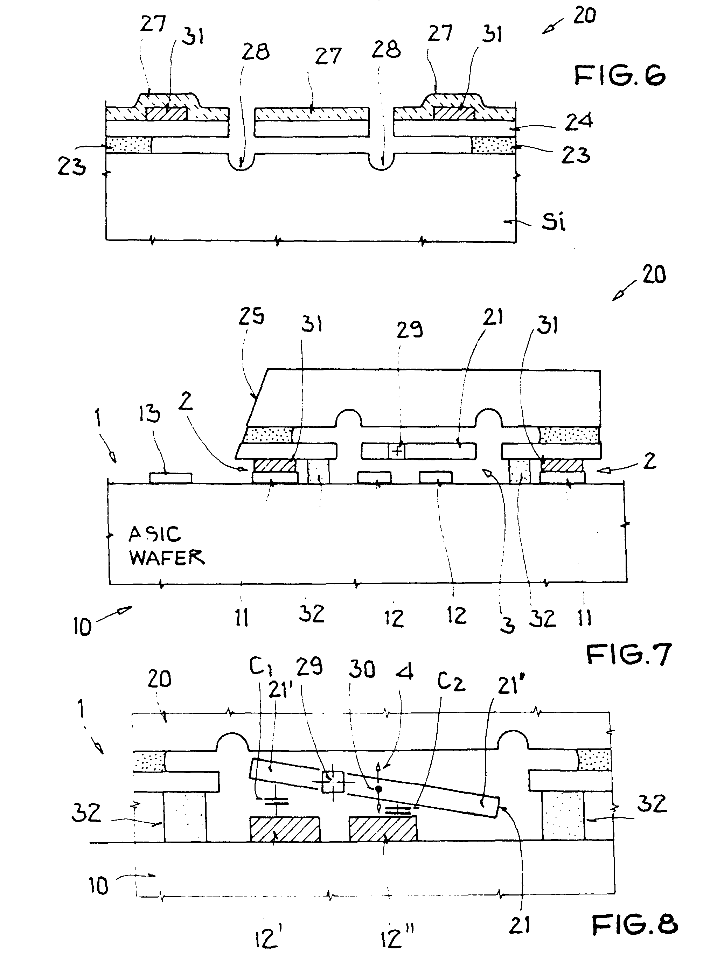

In **Fig. 3** ist dargestellt, wie der SOI-Wafer 20 bei der Herstellung zunächst von einer Seite bis zur Isolierschicht 23 mittels eines anisotropen Ätzverfahrens geätzt wird, so daß eine Ätzkante 25 und eine Aussparung 26 im SOI-Wafer 20 entstehen. Die Aussparung 26 dient dazu, nach dem Sägen des SOI-Wafers 20 an Bondpads 13 (Fig. 7) des Silizium-Wafers 10 zu gelangen. Als (nicht dargestellte) Maskiermaterialien kann Oxid, Nitrid oder bevorzugt eine Oxid-Nitrid-Verbindung verwendet werden.

Aus **Fig. 4** geht hervor, wie mittels eines bekannten Verfahrens der Fotolithographie auf die Siliziumschicht 24 des SOI-Wafers 20 eine gut leitende Ringstruktur 31, bevorzugt aus Aluminium oder Germanium aufgebracht ist. Sie hat den Zweck, in Verbindung mit der auf dem Wafer 10 angeordneten, korrespondierenden Ringstruktur 11 (Fig. 1) eine Waferbondung 2 (Fig. 7) zu bilden.

In **Fig. 5** ist der SOI-Wafer 20 zu einem späteren Zeitpunkt des Herstellprozesses dargestellt. Durch einen auf die Siliziumschicht 24 und die Ringstruktur 31 zur Maskierung aufgebrachten Fotolack 27 wird die Oberfläche des SOI-Wafers 20 strukturiert. Zunächst werden mittels Plasmaätztechnik Gräben 28 durch die Isolierschicht 23 und die Siliziumschicht 24 in die Oberfläche des SOI-Wafers 20 geätzt. Diese Gräben 28 bilden die Kontur der herzustellenden Wippe 21 (Fig. 2).

Danach wird, wie in **Fig. 6** gezeigt, auf naßchemischem Wege beispielsweise durch Flußsäure die Isolierschicht 23 entfernt und dadurch die Struktur der Wippe 21 freigelegt. Eine zwangsläufig auftretende Unterätzung der Siliziumschicht 24 hat keine weiteren Auswirkungen und kann in Kauf genommen werden. Nach dem erfolgten Freiätzen der Wippe 21 wird der Fotolack 27 entfernt und der SOI-Wafer 20 gereinigt.

Um einen in **Fig. 7** gezeigten kapazitiven Beschleunigungssensor 1 zu erhalten, müssen der Siiizium-Wafer 10 und der SOI-Wafer 20 miteinander verbunden werden. Dazu werden die beiden Wafer 10 und 20 derart aufeinandergelegt, daß die Ringstruktur 11 des Silizium-Wafers 10 und die Ringstruktur 31 des SOI-Wafers 20 aufeinanderliegen. Anschließend entsteht zwischen den Wafern 10 und 20 bei einer bestimmten Temperatur und unter Druck eine Waferbondung 2. Durch die Waferbondung 2 entsteht im Innern des Beschleunigungssensors 1 ein hermetisch dichter Hohlraum 3, in dem die Wippe 21 und die Elektroden 12 angeordnet sind.

Die Elektroden 12 werden mit der (nicht dargestellten) integrierten Schaltung in bekannter Weise verbunden (Metall-Polysilizium oder Metall/Monosilizium-Übergänge).

Die Elektroden 12 und die Ringstruktur 11 sind durch Isolationsschichten (z.B. Siliziumdioxid oder Siliziumnitrid) dielektrisch voneinander bzw. vom Substrat 20 isoliert.

Werden bei der Herstellung auf dem SOI-Wafer 20 Spacer (Abstandshalter) 32 vorzugsweise innerhalb der Ringstruktur 31 ausgebildet, wird bei der Bondung ein exakter Abstand zwischen dem SOI-Wafer 20 und dem Silizium-Wafer 10 eingehalten.

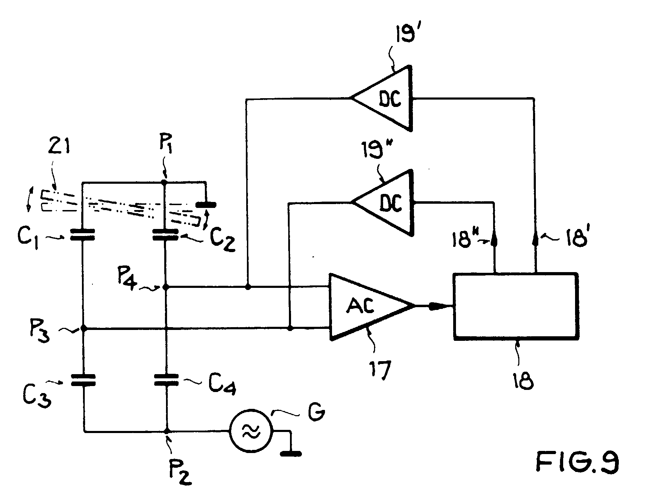

In **Fig. 8** ist skizzenhaft die Funktionsweise des Beschleunigungssensors 1 dargestellt. Die Wippe 21 setzt sich, bedingt durch die asymmetrisch angeordnete Drehachse 29, aus einem kürzeren Teilstück 21' und einem längeren Teilstück 21'' zusammen. Gegenüber dem Teilstück 21' ist die Elektrode 12' des Silizium-Wafers 10 elektrisch isoliert angeordnet; gegenüber dem Teilstück 21'' die elektrisch isolierte Elektrode 12". Die Anordnung Teilstück 21' und Elektrode 12' bilden einen Kondensator C₁, Teilstück 21'' und Elektrode 12'' einen Kondensator C₂. Die Wippe 21 ist über die metallene Waferbondverbindung 2 mit dem Bezugspotential verbunden.

Beim Einwirken einer Beschleunigungskraft in eine der beiden durch einen Pfeil 4 markierten Richtungen bewegt sich die Wippe 21, die eine träge Masse darstellt, um ihre Drehachse 21.

Wirkt beispielsweise auf den Beschleunigungssensor 1 eine Beschleunigungskraft in Richtung des Pfeiles 4 nach unten, so bewegt sich die Wippe 21, die eine träge Masse darstellt, um ihre Drehachse 29 gegen den Uhrzeigersinn. Der Abstand zwischen Elektrode 12' und Teilstück 21' verringert sich, so daß sich die Kapazität des Kondensators C₁ vergrößert. Umgekehrt vergrößert sich der Abstand zwischen Elektrode 12'' und Teilstück 21", so daß sich die Kapazität des Kondensators C₂ verringert.

Diese durch eine einwirkende Beschleunigungskraft verursachte, gegensinnige Kapazitätsänderung von C₁ und C₂ kann durch eine Auswerteschaltung erfaßt und weiterverarbeitet werden.

Ein Ausführungsbeispiel einer geeigneten Auswerteschaltung 5 ist in **Fig. 9** skizziert. Bei C₁ und C₂ handelt es sich um die beiden Kapazitäten des Beschleunigungssensors 1 (Fig. 8), die durch eine auf ihn einwirkende Beschleunigungskraft verändert werden. Jeweils eine Elektrode von C₁ und C₂ sind miteinander verbunden und bilden einen Schaltungspunkt P₁. Die andere Elektrode von C₁ ist mit einer Elektrode eines Koppelkondensators C₃ in einem Schaltungspunkt P₃, die andere Elektrode von C₂ mit einer Elektrode eines Koppelkondensators C₄ in einem Schaltungspunkt P₄ verbunden. Die jeweils andere Elektrode von C₃ und C₄ sind in einem Schaltungspunkt P₂ miteinander verbunden.

Die Schaltungspunkte P₁, P₂, P₃ und P₄ bilden eine kapazitive Brückenschaltung, bestehend aus den beiden Kapazitäten C₁ und C₂ des Beschleunigungssensors 1 (Fig. 8) und den beiden Koppelkondensatoren C₃ und C₄ der Auswerteschaltung 5. Ein Wechselstromgenerator G, dessen eine Elektrode mit dem Bezugspotential verbunden ist, führt dem Schaltungspunkt P₂ eine Wechselspannung zu, während der Schaltungspunkt P₁ auf Bezugspotential liegt.

Bei abgeglichener Brückenschaltung, d.h., wenn auf den Beschleunigungssensor keine Beschleunigungskraft einwirkt, ergibt sich zwischen den Schaltungspunkten P₃ und P₄ eine Spannung von 0 Volt. In allen anderen Fällen stellt die zwischen den Schaltungspunkten P₃ und P₄ sich ergebende Spannungsdifferenz ein Maß für die auf den Beschleunigungssensor einwirkende Beschleunigungskraft dar.

Die sich zwischen den Schaltungspunkten P₃ und P₄ ergebende Spannungsdifferenz, die direkt proportional zur einwirkenden Beschleunigungskraft ist, wird einem Wechselspannungsverstärker 17 und dessen Ausgangssignal wiederum einer Regelschaltung 18 zugeführt. Aufgabe der Regelschaltung 18 ist zum einen, einen Gleichspannunganteil aus dem sich aufgrund einer Beschleunigungskraft zwischen P₃ und P₄ ergebenden und mittels des Wechselspannungsverstärkers 17 verstärkten Signals zu entfernen. Weiterhin ist es Aufgabe der Regelschaltung 18, die aufgrund einer Beschleunigungskraft zwischen den Schaltungspunkten P₃ und P₄ sich ergebende Spannung nachgeschalteten Schaltungsteilen zur weiteren Verarbeitung zuzuführen.

Als dritte Aufgabe muß die Regelschaltung 18 dafür sorgen, daß sich die Wippe 21 (Fig. 8) ständig in einer mittleren Lage (Normallage) befindet, um Beschleunigungen in beiden durch den Pfeil 4 (Fig. 8) markierten Richtungen aufnehmen zu können. Hierzu weist sie zwei Ausgänge 18' und 18" auf, mittels denen jeweils eine Gleichspannung den Eingängen zweier Gleichspannungsverstärker 19' und 19" zugeführt werden. Der Ausgang des Gleichspannungsverstärkers 19' ist mit dem Schaltungspunkt P₄, der Ausgang des Gleichspannungsverstärkers 19" mit dem Schaltungspunkt P₃ verbunden. Durch das Zuführen einer Gleichspannung an die Schaltungspunkte P₃ oder P₄ und damit an die Elektroden 12' oder 12" (Fig. 8) kann aufgrund einer elektrostatischen Kraft die Wippe 21 (Fig. 8) in eine der beiden durch den Pfeil 4 (Fig. 8) markierten Richtungen bewegt werden.

Aus der sich demzufolge ergebenden Kapazitätsänderung der Kondensatoren C₁ und C₂ erkennt die Regelschaltung 18 wiederum die aktuelle Lage der Wippe 21 (Fig. 8), so daß ein geschlossener Regelkreis entsteht.

Daraus ergibt sich auch die Möglichkeit, einen Selbsttest des Beschleunigungssensors durchzuführen, indem den Elektroden 12' und 12'' (Fig. 8) ein Gleichspannungsimpuls zugeführt und von der Regelschaltung 18 überprüft wird, ob sich die beabsichtigte Lageänderung der Wippe 21 (Fig. 8) ergeben hat.

## Patentansprüche

1. Mikromechanischer Beschleunigungssensor, hergestellt aus einem ersten Halbleiterwafer (10) und einem zweiten Halbleiterwafer (20), wobei auf dem ersten Halbleiterwafer (10) wenigstens eine erste Elektrode (12) zur Bildung einer veränderbaren Kapazität vorgesehen ist und der zweite Halbleiterwafer (20) eine bewegliche zweite Elektrode (21) aufweist, **dadurch gekennzeichnet**, daß auf dem ersten Halbleiterwafer (10) eine mikroelektronische Auswerteeinheit (14) angeordnet ist.

2. Beschleunigungssensor nach Anspruch 1, **dadurch gekennzeichnet**, daß es sich bei dem ersten Halbleiterwafer (10) um einen Silizium-Wafer und bei dem zweiten Halbleiterwafer um einen SOI-Wafer handelt.

3. Beschleunigungssensor nach Anspruch 1, **dadurch gekennzeichnet**, daß es sich bei der zweiten, beweglichen Elektrode (21) um eine asymmetrisch aufgehängte Wippe handelt.

4. Beschleunigungssensor nach Anspruch 1 oder 2, **dadurch gekennzeichnet**, daß die erste Elektrode (12) aus gut leitfähigem Material der Metall- oder Polysiliziumebene des Silizium-Wafers (10) besteht.

5. Beschleunigungssensor nach einem der vorangehenden Ansprüche, **dadurch gekennzeichnet**, daß die auf dem Silizium-Wafer (10) angeordnete Auswerteeinheit (14) mittels der CMOS-Technologie hergestellt ist.

6. Beschleunigungssensor nach einem der vorangehenden Ansprüche, **dadurch gekennzeichnet**, daß auf der Oberfläche des Silizium-Wafers (10) eine geschlossene Ringstruktur (11) angeordnet ist.

7. Beschleunigungssensor nach einem der vorangehenden Ansprüche, **dadurch gekennzeichnet**, daß die geschlossene Ringstruktur (11) des Silizium-Wafers (10) aus dem Material der obersten Metallisierungsebene, im allgemeinen Aluminium, besteht.

8. Beschleunigungssensor nach Anspruch 6 oder 7, **dadurch gekennzeichnet**, daß auf der Oberfläche des SOI-Wafers (20) ebenfalls eine geschlossene, gut leitende Ringstruktur (31) korrespondierend zur Ringstruktur (11) des Silizium-Wafers (10) angeordnet ist.

9. Beschleunigungssensor nach Anspruch 8, **dadurch gekennzeichnet**, daß die Ringstruktur (31) auf dem SOI-Wafer (20) bevorzugt aus Aluminium oder Germanium besteht.

10. Beschleunigungssensor nach einem der vorangehenden Ansprüche, **dadurch gekennzeichnet**, daß zwischen dem SOI-Wafer (20) und dem Silizium-Wafer (10) Abstandshalter (32) vorzugsweise innerhalb der Ringstruktur (31) angeordnet sind.

## Claims

1. Micromechanical accelerometer, produced from a first semiconductor wafer (10) and a second semiconductor wafer (20), wherein at least one first electrode (12) is provided on the first semiconductor wafer (10) to form a variable capacitor, and the second semiconductor wafer (20) comprises a movable second electrode (21), characterised in that a microelectronic evaluation unit (14) is disposed on the first semiconductor wafer (10).

2. Accelerometer according to Claim 1, characterised in that the first semiconductor wafer (10) is a silicon wafer and the second semiconductor wafer is a SOI wafer.

3. Accelerometer according to Claim 1, characterised in that the second, movable electrode (21) is an asymmetrically suspended rocker.

4. Accelerometer according to Claim 1 or 2, characterised in that the first electrode (12) consists of a highly conductive material of the metal or polysilicon plane of the silicon wafer (10).

5. Accelerometer according to any one of the preceding Claims, characterised in that the evaluation unit (14) disposed on the silicon wafer (10) is produced by means of CMOS technology.

6. Accelerometer according to any one of the preceding Claims, characterised in that a closed annular structure (11) is disposed on the surface of the silicon wafer (10).

7. Accelerometer according to any one of the preceding Claims, characterised in that the closed annular structure (11) of the silicon wafer (10) consists of the material of the top metallization plane, generally aluminium.

8. Accelerometer according to Claim 6 or 7, characterised in that a closed, highly conductive annular structure (31) corresponding to the annular structure (11) of the silicon wafer (10) is also disposed on the surface of the SOI wafer (20).

9. Accelerometer according to Claim 8, characterised in that the annular structure (31) on the SOI wafer (20) preferably consists of aluminium or germanium.

10. Accelerometer according to any one of the preceding Claims, characterised in that spacers (32) are disposed between the SOI wafer (20) and the silicon wafer (10), preferably within the annular structure (31).

## Revendications

1. Accéléromètre micro-usiné, fabriqué à partir d'une première plaquette en semi-conducteur (10) et d'une seconde plaquette en semi-conducteur (20), dans le cas duquel sur la première plaquette en semi-conducteur (10) est prévue au moins une première électrode (12) pour former une capacité modifiable et la seconde plaquette en semi-conducteur (20) présente une seconde électrode mobile, caractérisé par le fait que sur la première plaquette en semi-continu (10) est disposé un organe de traitement micro-électronique (14).

2. Accéléromètre selon la revendication 1, caractérisé par le fait qu'en ce qui concerne la première plaquette en semi-conducteur (10), il s'agit d'une plaquette de silicium et qu'en ce qui concerne la seconde plaquette en semi-conducteur, il s'agit d'une plaquette SOI/ Silicium sur isolant.

3. Accéléromètre selon la revendication 1, caractérisé par le fait qu'en ce qui concerne la seconde électrode mobile (21), il s'agit d'une bascule suspendue de façon dissymétrique.

4. Accéléromètre selon la revendication 1 ou 2 , caractérisé par le fait que la première électrode (12) est constituée d'un matériau bon conducteur de la couche de métal ou de polysilicium de la plaquette en silicium (10).

5. Accéléromètre selon l'une des revendications précédentes, caractérisé par le fait que l'organe de traitement (14) disposé sur la plaquette en silicium (10) est réalisée au moyen de la technologie CMOS/métal-oxyde-semi-conducteur complémentaire.

6. Accéléromètre selon l'une des revendications précédentes, caractérisé par le fait que sur la surface de la plaquette en silicium (10) est disposée une structure annulaire fermée (11).

7. Accéléromètre selon l'une des revendications précédentes, caractérisé par le fait que la structure annulaire fermée (11) de la plaquette en silicium (10) est constituée du matériau de la couche de métallisation supérieure, en général l'aluminium.

8. Accéléromètre selon la revendication 6 ou 7 , caractérisé par le fait que sur la surface de la plaquette SOI (20) est également disposée une structure annulaire fermée, bonne conductrice (31) correspondant à la structure annulaire (11) de la plaquette en silicium (10).

9. Accéléromètre selon la revendication 8 , caractérisé par le fait que la structure annulaire (31) prévue sur la plaquette SOI (20) est constituée de préférence d'aluminium ou de germanium.

10. Accéléromètre selon l'une des revendications précédentes, caractérisé par le fait qu'entre la plaquette SOI (20) et la plaquette en silicium (10) sont disposés des écarteurs (32), de préférence à l'intérieur de la structure annulaire (31).
